# EUROPEAN PATENT APPLICATION

(11) **EP 4 815 116 A1**
(43) Date of publication of application: **30.09.2026**
(21) Application number: 25290013.9
(22) Date of filing: 28.03.2025
(51) Int. Cl.: H01M 10/654, H01M 4/13, H01M 4/139, H01M 4/66, H01M 4/62, H01M 10/0525

(54) **COMPOSITE HEAT TRANSFER STRUCTURE**

(71) Applicant: AIRBUS Operations GmbH, 21129 Hamburg (DE); Airbus (S.A.S.), 31700 Blagnac (FR)
(72) Inventor: Linde, Peter, 21129 Hamburg (DE); Lenczowski, Blanka, 31060 Toulouse Cedex 9 (FR)
(74) Representative: LKGLOBAL Partnerschaftsgesellschaft mbB

(57) **Abstract**

The present invention relates to an electrode device.

In order to provide an improved thermal management of a battery system, the electrode device (10), comprises a support structure (12), an electroactive structure (14) and a heat transfer structure (16). The support structure is configured for carrying the electroactive structure and the heat transfer structure. The electroactive structure is configured for storing and releasing of charge carriers (18). The heat conductivity of the heat transfer structure is higher than the heat conductivity of any of the support structure or the electroactive structure. The electroactive structure is arranged at the support structure. The heat transfer structure is arranged at the electroactive structure. The heat transfer structure is oriented to guide heat (20) away from a surface (22) of the electroactive structure to prevent thermal tensions (24) in its vicinity while providing diffusivity of the charge carriers to the surface

## Description

### FIELD OF THE INVENTION

The present invention relates to thermal management structure, more specifically the invention relates to an electrode device, an electrode ply, a battery system, an aircraft and a method for making the electrode device.

### BACKGROUND OF THE INVENTION

A battery system can store electrical energy in the form of charge carriers in its anode and cathode structure material. When charging or discharging the battery, charge carriers migrate between the anode and the cathode. This migration of charge carriers may generate heat within the battery system. The heat may undermine performance of the battery system and hence may be removed by a thermal management system. Yet certain kind of battery systems are incompatible with existing thermal management systems.

### SUMMARY OF THE INVENTION

There may thus be a need for an improved thermal management of a battery system.

The object of the present invention is solved by the subject-matter of the independent claims; further embodiments are incorporated in the dependent claims. It should be noted that the following described aspects of the invention apply also for the electrode device, the electrode ply, the battery system, the aircraft and the method for making the electrode device.

According to the present invention, an electrode device is provided, comprising a support structure, an electroactive structure and a heat transfer structure. The support structure is configured for carrying the electroactive structure and the heat transfer structure. The electroactive structure is configured for storing and releasing of charge carriers. The heat conductivity of the heat transfer structure is higher than the heat conductivity of any of the support structure or the electroactive structure. The electroactive structure is arranged at the support structure. The heat transfer structure is arranged at the electroactive structure. The heat transfer structure is oriented to guide heat away from a surface of the electroactive structure to prevent thermal tensions in its vicinity while providing diffusivity of the charge carriers to the surface.

As an advantage, an improved charging of the electrode device and a battery system results. As an advantage, a better thermal cycling of a battery can be provided. As an effect, due to lower temperature at the electrode device and lower thermal tensions cracks in the surrounding, i.e. matrix, e.g. resin, of the electrode device are mitigated. As an advantage, a longer battery life span results. As an advantage, cracks are reduced in any a variety of batter cell types comprising solid battery components. As a further advantage adhesion of the electroactive structure to the support structure is improved, while thermal induced crack formation is mitigated.

According to an example, the support structure is further configured for uptake and transfer of loads between building components that are electrically insulated from the electrode device.

As an advantage, an electrode device is developed that can simultaneously store energy and perform mechanical functions. As an advantage, the mechanical functions are improved while heat conductivity of the electrode device is improved and cracks are prevented.

According to an example, the heat transfer structure comprises a vertical oriented structure that forms vertically aligned channels at the surface of the electroactive structure and is configured to provide heat irradiation and to alleviate channeling of the charge carriers in a vertical direction of the surface.

As an effect, the vertical oriented structure dampens the impact of the charge carriers on the surface of the electroactive structure. As an effect, the vertical oriented structure facilitates a diverging of the impact side of the charge carriers on the surface of the electroactive structure. As an effect, deposition of the charge carriers upon each other is reduced which fosters faster conduction away of heat from the electrode device.

According to an example, the vertical oriented structure comprises at least one of the group comprising: VACNTs, SWCNTs, MWCNTs, Armchair-CNTs, Zig-Zag-CNTs, Chiral CNTs, carbon nanofibers, carbon nanoparticles, carbon quantum dots, graphene, carbon nanoribbons and carbon nanohorns.

As an advantage, a good electrical conductivity, a high thermal conductivity and mechanical strength is provided by the heat transfer structure. As an advantage, the heat transfer structure is compatible with CFRP, Carbon Fiber Reinforced Polymer, materials. As an advantage, the heat that is generated by the incoming charge carriers right before and during their impact on the surface of the electroactive layer, is led away by CNTs, that have excellent thermal conduction. As an advantage, the VACNTs improve the transverse mechanical properties of the composite structural battery, yielding increased strength and E-modulus.

According to the present invention, also an electrode ply is provided. The electrode ply comprises a first electrode device and at least a second electrode device according to one of the preceding examples. The first and the at least second electrode device intersect a common plane. An electroactive material of the first and the at least second electrode device is configured as cathode active material or anode material or separator material.

As an advantage, the electrode device can be integrated in a composite structure. As a further advantage, a structural composite battery can be formed from the plies. As a further advantage, a plurality of electrode device can carry and distribute loads.

According to the present invention, also a battery system is provided. The battery system comprises at least one primary electrode ply according to the previous example. The electroactive structure is configured as a cathode active structure. The battery system also comprises at least one secondary electrode ply according to the previous example. The electroactive structure is configured as an anode active structure. The battery system also comprises at least one separator ply, comprising separator material comprising insulating material and an electrolyte. The at least one separator ply is stacked between the at least one primary electrode ply and the at least one secondary electrode ply. The at least one separator ply is configured to electrically insulate the at least one primary electrode ply and the at least one secondary electrode ply while providing diffusion of charge carriers between the at least one primary electrode ply and the at least one secondary electrode ply.

As an advantage, the charging behavior of structural batteries is improved. As an advantage, the inner primary and secondary plies that are located inside the more or less thick composite laminates of the battery system, have better access to an efficient heat conduction mechanism through the heat transfer structures. As an advantage, a nanostructure is oriented with a macroscopic composite ply structure of a battery system. As an advantage, VACNTs of the heat transfer structure can be placed in the cathode ply both "downwards", towards the anode, as well as "upwards" away from the battery, since the carbon fibers and the cathode coating both get heated up during charging and lead away heat in any direction to contribute to reducing excessive temperatures. As an advantage, heat can be irradiated more efficiently via the large surfaces of the electrode plies. As an advantage, cracks in the resin binder of the battery system are prevented. As an advantage, thermally induced damage such as cracking is prevented which leads to an extended operation life span for the structural battery. As an advantage, the VACNTs of the heat transfer structure provide improved mechanical properties in the direction transverse to the structural battery, in a degree increasing to their appearance. As an advantage, if several structural batteries are connected in series, the cathode of cell i, i.e. battery system i should be connected with the anode of cell i+1, i.e. battery system i+1. In such a case VACNTs will improve the electrical connection, by facilitating the transport of electrons, due to the CNT's high electrical conduction. As an advantage, accelerated charging behavior of the composite structural battery with reduced temperature due to improved thermal conductivity results. As an advantage, the VACNTs of the heat transfer structure, if they are placed outwards as well, i.e., away from the inside of the structural battery, provide improved electrical conductivity to the current collectors, placed on the cathode, and on the anode, respectively.

According to an example, the heat conducting structure is concentrated on at least one of opposite surfaces of the at least one separator ply that points towards the at least one primary electrode ply or the at least one secondary electrode ply.

As an effect, the heat conducting structure is not comprised by a core material of the at least one separator ply.

As an advantage, the heat conducting structure, while concentrated on at least one surface of the at least one separator does not obstruct the electric insulation within the at least one separator ply.

According to the invention, also an aircraft is provided. The aircraft comprises an airframe comprised of building components, at least one load, the battery system of one of the previous examples. The battery system and the at least one load are supported by the airframe. The battery system is connected to supply the load with energy. Preferably, the battery system transfers loads between the building components of the airframe.

As an advantage, a lighter aircraft results. As an advantage, an aircraft with higher gravimetric energy density results. As an advantage, a more efficient aircraft results. As an advantage, an aircraft with improved thermal management results.

According to the invention, a method for making an electrode device is provided. The method comprises the following steps:
- Providing a support structure,
- Providing an electroactive structure, and
- Providing a heat transfer structure. The support structure is configured for carrying the electroactive structure and the heat transfer structure. The electroactive structure is configured for storing and releasing of charge carriers. The heat conductivity of the heat transfer structure is higher than the heat conductivity of any of the support structure or the electroactive structure. The electroactive structure is arranged at the support structure. The heat transfer structure is arranged at the electroactive structure and the heat transfer structure is oriented to guide heat away from a surface of the electroactive structure to prevent thermal tensions in its vicinity while providing diffusivity of the charge carriers to the surface.

As an advantage, an easier method for improving thermal management for a battery system results.

According to an aspect, a composite heat transfer structure is provided.

According to an aspect, an improved charging behavior of structural batteries is provided having cathode and anode plies. The structural batteries may be located inside more or less thick composite laminates, and the inner plies may not have access to any efficient heat conduction mechanism. Therefore, vertically aligned carbon nano tubes - VACNTs are placed in particular at the cathode plies. The VACTNs are placed so that they reach through the resin rich layer and into the carbon fibers of the composite. During charging the travelling Li-ions generate heat near the cathode and when getting deposited on the cathode of the structural battery. The VACNTs display high thermal conduction and can lead away heat from the cathode. It is suggested that the VACNTs are placed in the cathode ply both "downwards", towards the anode, as well as "upwards" away from the battery, since the carbon fibers and the cathode coating both get heated up during charging, and leading away heat in any direction will contribute to reducing excessive temperatures. This will reduce thermally induced damage such as cracking, and lead to an extended operation life span for the structural battery.

According to an aspect, a heat conducting structure for a battery with low thermal conductivity is provided, which consist of a main group element and is not a metal. Usually, battery systems comprise metal current collector plates, which serves as support structure for electroactive materials to store electric energy and are also involved in the conduction of heat in the system. Yet there are certain battery types, like structural batteries, that are metal-free and fulfill two major functions at once: storing energy and transferring structural loads. This can be done by employing fibrous support materials that carry loads but also an electroactive material or that even are the electroactive material itself. Yet the thermal conductivity of the support materials, i.e. fibrous materials, is not as high as with metallic support materials and so, while charging the structural battery a lot of heat is contained within the core material of the structural battery and not transferred to the outside as with metal current collector plates.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of an electrode device.
Fig. 2 schematically shows another example of an electrode device.
Fig. 3 schematically shows another example of an electrode device, an electrode ply and a battery system.
Fig. 4 shows an example of an aircraft.
Fig. 5 shows basic steps of an example of a method for making an electrode device.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

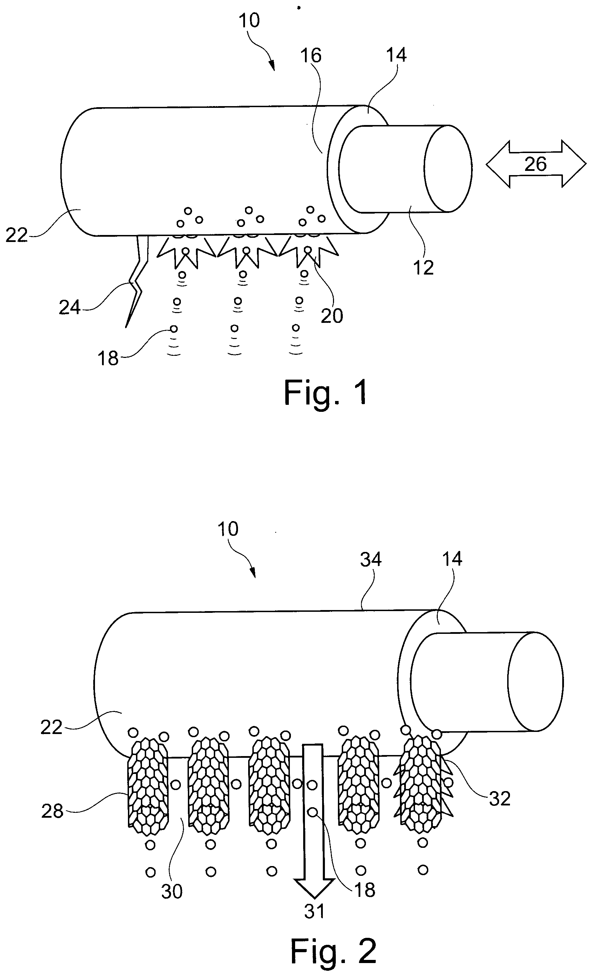

Fig. 1 schematically shows an example of an electrode device 10. The electrode device 10 comprises a support structure 12, an electroactive structure 14 and a heat transfer structure 16. The support structure 12 is configured for carrying the electroactive structure 14 and the heat transfer structure. The electroactive structure 14 is configured for storing and releasing of charge carriers 18. The heat conductivity of the heat transfer structure is higher than the heat conductivity of any of the support structure 12 or the electroactive structure 14. The electroactive structure 14 is arranged at the support structure 12. The heat transfer structure is arranged at the electroactive structure 14. The heat transfer structure is oriented to guide heat, as shown by the serrated corners 20 in Fig. 1, away from a surface 22 of the electroactive structure 14 to prevent thermal tensions, as shown by the lightning flash 24 in Fig. 1, in its vicinity while providing diffusivity of the charge carriers 18 to the surface 22.

The electrode device 10 can also be referred to as electrode or cathode fiber or anode fiber or cathode or anode.

The term "electrode device" relates to a component of a battery cell that is configured for storing and releasing charge carriers 18 within its material and that serves as a conductor through which electricity enters or leaves a medium. The electrode device 10 herein can also be defined as battery component that allows for the transfer of charge carriers 18.

The term "support structure" relates to a system of elements designed to maintain the stability and integrity of the electrode device 10.

The support structure 12 can also be referred to as reinforcement structure.

The term "electroactive structure" relates to a layer that is able to release or store charge carriers 18 when exposed to an electric potential.

In an example, the electroactive structure 14 is arranged on an external surface of the support structure 12 and the heat transfer structure is arranged on an external surface of the electroactive structure 14, as shown in Fig. 1.

In an example, the electroactive structure 14 comprises electrolyte, not shown in Fig. 1.

In an example, the electroactive structure 14 comprises a cathode active material, not shown in Fig. 1.

In an example, the electroactive structure 14 comprises an anode material, not shown in Fig. 1.

In an example, the electroactive structure 14 comprises separator material, not shown in Fig. 1.

In an example, the electroactive structure 14 comprises electrical insulating material, not shown in Fig. 1.

In an example, the electroactive structure 14 comprises a curved, i.e. round surface, or interface to its surroundings, i.e., a matrix, as shown in Fig. 1.

In an example, the electroactive structure 14 is deposited on the support structure 12, as shown in Fig. 1.

In an example, the electroactive structure 14 covers the support structure 12, as shown in Fig. 1.

In an example, the heat transfer structure is deposited on the surface 22 of the electroactive structure 14, as shown in Fig. 1.

In an example, the heat transfer structure covers the surface 22 of the electroactive structure 14, as shown in Fig. 1.

In an example, the surface 22 of the electroactive structure 14 has a bend shape with a curvature, as shown in Fig. 1.

In an example, the surface 22 of the electroactive structure 14 has a bend shape with a curvature while the surrounding matrix, not shown in Fig. 1, extends in a flat direction without no curvature.

In an example, the electrode device 10 forms a core-shell structure, wherein the support structure 12 forms the core and is surrounded by a first layer of the electroactive structure 14 and a second layer comprising the heat transfer structure, as shown in Fig. 1.

In an example, the electroactive structure 14 is coated on the support structure 12 and the heat transfer structure is coated on the electroactive structure 14, as shown in Fig. 1.

In an example, the electroactive structure 14 separates the support structure 12 from its surrounding matrix, being at least one of the group of: binder, filler or electrolyte.

In an example, the heat transfer structure separates the support structure 12 and the electroactive structure 14 from the surrounding matrix.

In an example, the heat transfer structure is bound to the electroactive structure 14.

In an example, the heat transfer structure is chemically bound to the electroactive structure 14.

In an example, the heat transfer structure is bound by covalent bonds to the electroactive structure 14.

In an example, the charge carriers 18 are provided by an adjacent electrode device 10, not shown in Fig. 1, and stem from the surroundings of the electrode device 10.

The term "heat" relates to heat that is generated by the movement of the charge carriers 18 within the battery and their collision with battery components like the electrode device 10 and more specifically by their collision with the electroactive structure 14 of the electrode device 10 or any other structure that blocks the charge carriers 18 on their path within a battery system. Heat is generated more specifically, when charging a battery and the charge carriers 18 collide with the surface 22 of the electrode active structure being configured as cathode active structure or anode active structure. Heat can also be generated if the charge carriers 18 collide with an electrolyte in the form of a solid electrolyte or a binder material of the battery, like a polymeric material, or for example a resin. The phenomenon can also be understood as heat generated under electrical resistance of a battery system.

In an example, the heat is generated on the surface 22 of the electrode active structure being a cathode active structure.

The term "heat transfer structure" relates to a component that is able to accept thermal energy and transfer and irradiate it into a certain direction to dissipate the thermal energy.

In an example, the heat transfer structure is a non-metallic structure, not shown in Fig. 1.

The term "charge carriers" relates to molecules, atoms and other particles carrying electrical charge, it preferably relates to electrons and ions.

In an example, the charge carriers 18 are metal ions.

In an example, the charge carriers 18 are lithium or sodium ions.

The term "heat conductivity" relates to the specific thermal conductivity of a substance.

In an example, the heat conductivity of the support material is lower, while not a metal and the heat conductivity of the electroactive material and the binder, polymer matrix, resin, electrolyte is also lower than the heat conductivity of the heat transfer structure, which has the highest thermal conductivity in the whole electrode device 10 or a battery system comprising the electrode device 10. Usually, this task is fulfilled by a metallic current collector, which here however is present in the form of a non-metallic support structure 12 that has a lower thermal conductivity as the heat transfer structure it carries. Normal metallic current collectors do not allow for diffusivity of charge carriers 18, otherwise a battery would not function.

The term "oriented" relates to an alignment of the heat transfer structure on a molecular level and a nanoscopic level, such that molecular or nano-elements of the heat transfer structure attain a certain main alignment direction in respect to the surface 22 of the electroactive structure 14 as fundamental basis.

The term "surface" relates to an external interface region of the electrode device 10 to its surroundings. The surroundings can comprise, binder, filler or electrolyte.

In an example, the binder is a polymeric substance or a resin, not shown in Fig. 1.

The term "thermal tensions" relates to changes in the volume of the electrode device 10 due to thermal expansion with respect to its surroundings.

In an example, thermal expansion of the electrode device 10 can lead to fractures and cracks in the matrix surrounding the electrode device 10 and to structural instability, as shown in Fig. 1.

The term "vicinity" relates to the interface between the electrode device 10 and the surrounding.

The term "diffusivity" relates to the property of the heat transfer structure of being permeable with respect to charge carriers 18 and allowing the transfer of charge carriers 18 from the surroundings of the electrode device 10 to the surface 22 of the electroactive structure 14. As an effect, impacts of the charge carrier on the cathode are decelerated.

In an example, the electrode device 10 consists of the support structure 12, the electroactive structure 14 and the heat transfer structure 16.

In an example of Fig. 1, the support structure 12 is further configured for uptake and transfer of loads, as shown by arrow 26 in Fig. 1, between building components, not shown in Fig. 1, that are electrically insulated from the electrode device 10 and not shown in Fig. 1.

The term "uptake and transfer of loads" relates to the property of the support structure 12 to serve as a guide for loads.

In an example, loads are tensile loads, compressive load, torsional loads and vibrational loads.

The term "building components" relates to parts of a structural framework that support a battery system comprising the electrode device 10 but are also supported by the electrode device 10s of the battery system or the battery system itself.

In an example, building components are structural parts of a vehicle like a car or an aircraft, not shown in Fig. 1.

The term "electrically insulated" relates to blocking the flow of electrical current of the electrode device 10.

In an example, the electrode device 10 has a closed circuit that is shielded from the building components, not shown in Fig. 1.

In an example, the support structure 12 is also configured for load transfer to the electroactive layer and the heat transfer layer.

In an example, the electroactive layer and the heat transfer layer are configured for load transfer uptake from the support structure 12.

In an example, the electrode device 10 is an integral part of the battery system itself. This means that the materials used to store the charge carriers 18 and the energy also perform mechanical functions.

Fig. 2 schematically shows another example of an electrode device 10. The heat transfer structure comprises a vertical oriented structure 28 that forms vertically aligned channels 30 at the surface 22 of the electroactive structure 14 and is configured to provide heat irradiation and to alleviate channeling of the charge carriers 18 in a vertical direction, as shown by arrow 31 of Fig. 2, of the surface 22.

In an example, the heat transfer structure imposes certain mechanical obstacles in the diffusion path of the charge carries that direct the path of the charge carries along the molecular or nanoscopic structure of the heat transfer structure, as shown in Fig. 2.

The term "vertical oriented structure" relates to a molecular or nanoscopic structure of the heat transfer structure and implies that the molecular or nanoscopic elements of the heat transfer structure are aligned and extent in a direction transverse, i.e. normal to the surface 22 of the electroactive structure 14.

The channels can also be referred to as passages, pores or gateways.

The term "vertically aligned channels" relates to passages, pores or gateways that are formed in between the heat transfer structure and that allows the diffusion of the charge carriers 18 from the surrounding of the electrode device 10 to the surface 22 of the electroactive structure 14, as shown in Fig. 2.

The term "vertical direction" relates to a direction that is normal to the surface 22 of the electroactive structure 14, as shown in Fig. 2.

The term "alleviate channeling" relates to the function of the heat transfer structure that reduces the impedance with respect to the conductivity of the charge carriers 18 to the surface of the electroactive device.

In an example, the vertically aligned channels 30 are linear, as shown in Fig. 2.

In an example, the channels 30 are configured to be filled by the surrounding of the electrode device 10, wherein the surrounding comprises the matrix and the matrix comprises at least one of: filler, binder or electrolyte, not shown in Fig. 2.

In an example, the vertically aligned channels 30 are linear without any channel branching off.

In an example, the vertically aligned channels 30 are branch off into multiple smaller channels 30, not shown in Fig. 2.

In an example, the nanostructure comprises a fibrillar material.

In an example of Fig. 2, the vertical oriented structure 28 comprises at least one of the group comprising: VACNTs, SWCNTs, MWCNTs, Armchair-CNTs, Zig-Zag-CNTs, Chiral CNTs, carbon nanofibers, carbon nanoparticles, carbon quantum dots, graphene, carbon nanoribbons and carbon nanohorns.

The term VACNTs, SWCNTs, MWCNTs can also be generally referred to as CNTs.

In an example, the CNTs comprise a diameter between 0.4 and 3 nm, and the length between 20 and 1000 nm.

The VACNTs can also be referred to as vertically aligned carbon nano tubes. They can be understood as vertically aligned carbon nanotube forest, as shown in Fig. 2.

The SWCNTs can also be referred to as single-walled carbon nano tubes.

The MWCNTs can also be referred to as multi-walled carbon nano tubes.

In an example, preferably, the heat transfer structure comprises VACNTs that are vertically aligned with the surface 22 of the electroactive structure, as shown in Fig. 2. The VACNTs are arranged on the surface 22 of the electroactive structure 14 and are bonded with their ends of the individual CNT tubes end-on to the surface 22 of the electroactive structure 14, as shown in Fig. 2.

In an example, the CNTs are grafted end on the surface 22 of the electroactive structure, as shown in Fig. 2.

In an example, the CNTs are chemically functionalized at their ends, not shown in Fig. 2.

In an example, the CNTs are bound to the surface 22 of the electroactive structure 14 by their chemically functionalized ends, not shown in Fig. 2.

In an example, the CNTS are bound to the surface 22 of the electroactive structure 14, when the surrounding, i.e. matrix has a high viscosity, i.e. is liquid and are erected in a vertical direction before the matrix has a low viscosity, i.e. is solid, not shown in Fig. 2.

In an example, the CNTs are dispersed in a resin, and by a subsequent electrochemical process the CNTs are made to be oriented transverse to the direction of the electroactive structure 14 of the electrode device 10, not shown in Fig. 2.

In an example, a carbon-based heat transfer structure is provided, as shown in Fig. 2.

In an example, the heat transfer structure comprises carbon nanomaterials having their longest extension oriented in a vertical direction from the surface 22 of the electroactive structure 14, not shown in Fig. 2.

In an example, the heat transfer structure comprises fibrillar carbon nanomaterials that are vertically aligned with the surface 22 of the electroactive structure 14, not shown in Fig. 2.

In an example, fibrillar nanostructures of the heat transfer structure are grafted end-on on the surface of the electroactive structure, not shown in Fig. 2.

In an example, the heat transfer structure comprises carbon nanomaterials that are chemically bonded with the surface 22 of the electroactive structure 14, not shown in Fig. 2.

In an option, the heat transfer structure consists of VACNTs.

In an example, the CNTs are chemically bound to the surface 22 of the electroactive layer.

In an example, the CNTs are chemically functionalized at their ends and chemically bound to the surface 22 of the electroactive layer.

In an example, the VACTNs can be placed so that they reach through a resin rich layer of the surrounding of the electrode device 10 and into the carbon fibers, not shown in Fig. 2.

In an example, the CNTs are linked by covalent bonds to the surface 22 of the electroactive layer.

In an example of Fig. 2, the support structure 12 comprises a fibrous material.

The term "fibrous material" relates to a fiber strand or a fiber.

In an example, the fibrous material comprises carbon fibres or glass fibres.

In an example, the carbon fibres comprise at least one of: PAN-based carbon fibre, Pitch-based carbon fiber, Rayon-based carbon fibre, are of Ultra-high modulus type, High modulus type, Intermediate modulus type, Standard modulus type or Low modulus type.

In an example, the electrode device 10 is configured as structural element of a carbon composite laminate.

In an example, the glass fibres comprise at least one of: E-glass, A-Glass, C-Glass, D-Glass, S-Glass, R-Glass, AR-Glass, ECR-Glass.

In an example, the fibrous material comprises a main fibre direction traverse or preferably perpendicular to the vertical oriented structure 28 of the heat transfer structure.

As an advantage, a lighter, yet more stable electrode device results. As an advantage, fiber materials with low thermal conductivity can be employed in an electrode device. As an advantage, a higher variability of fiber materials can be employed in an electrode device. As an advantage, better insulation can be achieved in a fiber-based battery system.

In an example of Fig. 2, the heat transfer structure is concentrated at a first face area 32 of the surface 22 of the electroactive structure 14 configured for the highest rate of charge carrier diffusivity.

The term "first face area" relates to a surface section of the electroactive structure 14.

The term "highest rate of charge carrier diffusivity" relates to a surface section where the most charge carriers 18 contact the surface 22 of the electroactive structure 14 or impinge the surface 22 of the electroactive structure 14.

In an example, the electroactive structure 14 comprises a curved surface, as shown in Fig. 2.

In an example, for the electroactive structure 14 comprising a curved surface, the first face area 32 with the highest rate of charge carrier diffusivity is an apex of the curved surface that points toward an opposing electroactive structure 14 releasing the charge carriers 18 that are received or taken up by the electroactive structure 14 predominantly with the first face area 32, as shown in Fig. 2. In order to reduce heat at this most frequently contacted area by the charge carriers 18, the heat transfer structure is concentrated or focused at this area to remove heat and mitigate thermal tensions, as shown in Fig. 2.

The term "concentrated" means that the most material of the heat transfer structure is provided at this section, i.e. that the density of heat transfer structure is the highest at this section, i.e. that the material is more focused in this section than at other sections.

In an example, the electroactive structure 14 configured for the highest rate of charge carrier diffusivity is at the apex of the cross-section of a fiber of the support structure 12 that is configured for pointing towards a separator ply and towards another electroactive structure 14, not shown in Fig. 2, of a battery arrangement or system that integrates the electrode device 10.

As an advantage, local thermal tensions can be prevented. As an advantage, curved electroactive surfaces can be deployed.

In an example of Fig. 2, the heat transfer structure is further concentrated at a second face area 34 of the electroactive structure 14 opposite the first face area 32 to guide accumulated heat away from the first face area 32 and serve as electrical contact of the electrode device 10.

The term "second face area" relates to a surface section of the electroactive structure 14.

The term "electrical contact" relates to an interface for connecting wires of an electrical circuit and/or a charge collector.

In an example, since the cathode and anode fibers get heated up through their cross-section during charging, it may be worthwhile to apply VACNTs as well in the direction facing away from the incoming charge carriers 18, so as to lead away more heat.

As an advantage, heat can be guided more efficiently away from the center of electrochemical interaction of the electrode device. As an advantage, heat radiation is irradiated more efficiently outside a battery system comprising the electrode device.

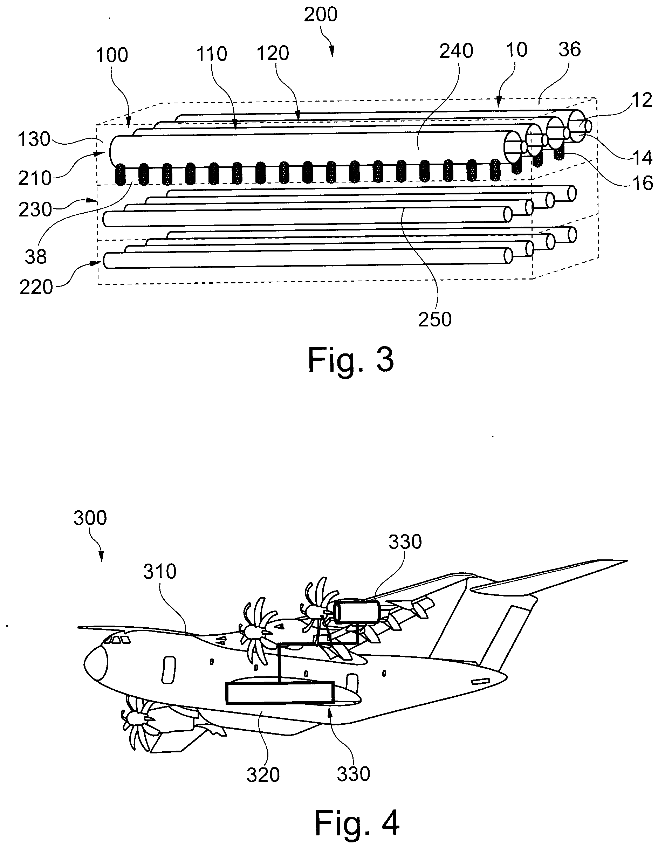

Fig. 3 schematically shows another example of an electrode device 10, an electrode ply 100 and a battery system 200. The device 10 further comprises a matrix material 36 enclosing at least a part of the heat transfer structure with the electroactive structure 14 and the support structure 12. At least a part 38 of the microstructure of the matrix material 36 is aligned at a vertical orientation of the heat transfer structure.

The term "matrix material" relates to the surroundings of the electrode device 10 that can comprise at least one of binder, filler or electrolyte.

The term "microstructure of the matrix" relates to a molecular, nanoscopic or microstructure arrangement that influences the diffusion of charge carriers 18. This arrangement can be aligned at the molecular or nanoscopic structure of the heat transfer structure to facilitate diffusion of the charge carriers 18, as shown in Fig. 3.

The term "vertical orientation" relates to the molecular, nanoscopic or microstructure arrangement that is aligned preferentially with a normal of the surface 22 of the electroactive structure 14.

In an example, the matrix material 36 comprises at least one of the group of binder, electrolyte or filler.

In an example, the electrolyte is binder and filler at the same time.

In an example, the device further comprises a matrix material 36 enclosing at least a part of the heat transfer structure with the electroactive structure 14 and the support structure 12 and at least a part 38 of the microstructure of the matrix material 36 is aligned at a vertical orientation of the vertical oriented structure 28 of the heat transfer structure, as shown in Fig. 3.

In an example, the binder is a polymeric material.

In an example, the binder is a resin.

In an example, the electrolyte is a solid phase electrolyte or a liquid electrolyte.

In an example, the electrolyte is a polymeric material.

As an advantage, the heat transfer structure alleviates mechanical tensions between the electroactive structure and the matrix material. As an advantage, the heat transfer structure improves binding between the electroactive structure and the matrix material. As an advantage, the heat transfer structure improves the interface region between the electroactive structure and the matrix material. As an advantage, the reduction of impedance with respect of the diffusivity of the charge carriers is facilitated. As an effect, collisions of the charge carriers with molecules of the resin structure during their travel is mitigated to reduce heat. As a further advantage Li-ions travel with less resistance inside a CNT or nearby the CNT, caused by the fact that the resin's microstructure is oriented more along the direction of the CNT, and thus the Li-ion can travel faster and with less collisions. As a further advantage, increased charging efficiency with faster charging due to easier Li-ion transport in parallel with the VACNTs results due to the resin microstructure oriented in parallel with the VACNTs.

Fig. 3 also schematically shows an example of an electrode ply 100. The electrode ply 100 comprises a first electrode device 110 and at least a second electrode device 120 according to one of the preceding examples. The first and the at least second electrode device 110, 120 intersect a common plane 130. An electroactive material of the first and the at least second electrode device 110, 120 is configured as cathode active material or anode material or separator material.

The electrode ply can also be referred to as electrode sheet or electrode matrix, electrode panel or electrode tissue, electrode net, or electrode gauze or electrode or electrode ply or anode or cathode or anode ply or cathode ply.

The term "cathode active material" relates to a material in a battery, that is responsible for storing and releasing ions, e.g. lithium ions, during charge and discharge cycles.

The term "anode material" relates to a material in a battery, that is responsible for storing and releasing ions, e.g. lithium ions, during charge and discharge cycles.

In an example, the cathode active material comprises metal oxides and/or phosphates.

In an example, the cathode active material comprises lithium cobalt oxide, lithium iron phosphate or lithium nickel manganese cobalt oxide and combinations thereof.

In an example, the cathode active material comprises LiFePO₄.

In an example, the anode material is carbon based.

In an example, the anode material is made of carbon material.

In an example, the anode material is the support material.

In an example, the anode material comprises the support material and the electroactive structure 14, as shown in Fig. 3.

In an example, the anode material comprises fibrous material.

In an example, the anode material comprises carbon fibers.

In an example, the anode material is made from carbon fibers.

In an example, the separator material comprises electrically insulating material.

In an example, the separator material is made of electrically insulating material.

In an example, the separator material is made of glass.

In an example, the separator material is made of glass fibers.

In an example, the electroactive structure 14 and the support structure 12 are both made of separator material.

In an example, the electroactive structure 14 and the support structure 12 are both unified in an single separator structure made from separator material.

The term "separator material" relates to a material that comprises an insulating material and an electrolyte that are arranged as a barrier for electrical insulation while allowing the passage of ion charge carriers 18.

In an example, all surfaces of the electrode plies are covered by matrix material 36, as shown in Fig. 3.

In an example, the first electrode device 110 and the at least a second electrode device 120 are sticked together by the matrix material 36, as shown in Fig. 3.

Fig. 3 also schematically shows an example of a battery system 200. The battery system 200 comprises at least one primary electrode ply 210 according to the previous example. The electroactive structure 14 is configured as a cathode active structure. The battery system 200 further comprises at least one secondary electrode ply 220 according to the previous example. The electroactive structure 14 is configured as an anode active structure. The battery system 200 further comprises at least one separator ply 230, comprising separator material comprising insulating material and an electrolyte. The at least one separator ply is stacked between the at least one primary electrode ply 210 and the at least one secondary electrode ply 220. The at least one separator ply is configured to electrically insulate the at least one primary electrode ply 210 and the at least one secondary electrode ply 220 while providing diffusion of charge carriers 18 between the at least one primary electrode ply 210 and the at least one secondary electrode ply 220.

The battery system can also be referred to as structural battery, battery, accumulator, composite battery, composite stack, composite stack battery or stacked battery.

In an example, structural batteries are multifunctional materials that actively contribute to the load-bearing capacity of a structure, whereas conventional batteries are primarily optimized for their function as energy storage devices. The materials in structural batteries are selected and arranged in such a way that they fulfill both electrochemical and mechanical requirements.

The term "separator ply" relates to a separator membrane that electrically separates the at least one primary electrode ply 210 and the at least one secondary electrode ply 220, as shown in Fig. 3.

The term "stacked" relates to the separator ply being sandwiched and tightly fused between the main faces of the at least one primary electrode ply 210 and the at least one secondary electrode ply 220, as shown in Fig. 3.

In an example, the more than at least one primary electrode ply 210 is provided as two, three, four, five, six, ten, twenty, hundred primary electrode plies.

In an example, the more than at least one secondary electrode ply 220 is provided as two, three, four, five, six, ten, twenty, hundred secondary electrode plies.

In an example, the more than at least one separator ply is provided as two, three, four, five, six, ten, twenty, hundred separator plies.

In an example, the battery system 200 comprises a plurality of primary electrode plies, secondary electrode plies and separator plies that are stacked above each other periodically and form a plurality of battery cells in the battery system 200, not shown in Fig. 3.

In an example, the at least one primary electrode ply 210, the at least one separator ply and the at least one secondary electrode ply 220 are provided in this row of order as periodically repeating stack to form the battery system 200, not shown in Fig. 3.

In an example, heat conducting structures pointing outward the battery system 200 stack form terminal end connections for an electric circuit to connect the battery system 200, not shown in Fig. 3.

In an example, the battery system 200 is configured not only to carry its own load, but also to absorb external loads acting on the structure, not shown in Fig. 3.

In an example, the molecular or nanoscopic main extension direction of the heat transfer structure is aligned with the vertical of the battery system 200 stack, as shown in Fig. 3.

In an example, the battery system 200 utilizes carbon material in the anode, i.e. the at least one secondary electrode ply 220. The cathode, i.e., the at least one primary electrode ply 210 is often built up on a carbon base coated with "cathode coating", i.e. the cathode active structure. The structurally integrated "Composite Structural Battery", i.e. battery system 200, utilizes carbon fibers for both anode and cathode. The carbon fibers are at the same time functionalized to act as cathode and structurally within a carbon composite laminate.

In an example, the composite structural battery, i.e. battery system 200 comprises from the top to the bottom, a top ply of epoxy resin reinforced by carbon fibers coated with cathode coating, i.e. the at least one primary electrode ply 210. A separator ply comprising epoxy resin reinforced by glass fibers, that let charge carrier ions pass through, and blocks electrons, i.e. insulates anode and cathode from each other, to avoid "short-circuit". At the bottom is the anode ply, i.e. the at least one secondary electrode ply 220 consisting of epoxy resin and carbon fibers.

In an example, the cathode in the battery system 200 configured as Li-ion batteries is usually made of carbon, for example, and has an active cathode coating, such as LiFePO₄. In this case, the anode is made of carbon. This means that the anode has no active coating.

In an example of Fig. 3, the heat conducting structure is concentrated at at least one 240 of opposite faces of the at least one primary electrode ply 210 and/or the at least one secondary electrode ply 220, that points towards or points away from the corresponding at least one primary electrode ply 210 or at least one secondary electrode ply 220.

The term "opposite faces" relates to the two main faces of the primary and secondary electrode plies whose face normal point in different directions, as shown in Fig. 3.

In an example, the heat conducting structure is concentrated on a face of the at least one primary electrode ply 210 that points towards a face of the at least one secondary electrode ply 220 where heat conducting structure is concentrated. Such both the heat conducting structures point towards themselves and towards the separator ply, not shown in Fig. 3.

In an example, the heat conducting structure is concentrated on a face of the at least one primary electrode ply 210 that points away from a face of the at least one secondary electrode ply 220 where heat conducting structure is concentrated, not shown in Fig. 3.

In an example, the heat conducting structure is concentrated on a face of the at least one secondary electrode ply 220 that points away from a face of the at least one primary electrode ply 210 where heat conducting structure is concentrated, not shown in Fig. 3.

In an example, the heat conducting structure is concentrated on a face of the at least one primary electrode ply 210 that points away from a face of the at least one secondary electrode ply 220 and heat conducting structure is concentrated on a face of the at least one secondary electrode ply 220 that points away from a face of the at least one primary electrode ply 210, not shown in Fig. 3.

In an example, the heat conducting structures form heat conducting structures layers at the face of each the primary and secondary electrode plies.

As an advantage, the cathode ply has VACNTs distributed all over the surface, stretching from the cathode fibers, in the direction towards the separator.

In an example of Fig. 3, the heat conducting structure is concentrated on at least one 250 of opposite surfaces of the at least one separator ply that points towards the at least one primary electrode ply 210 or the at least one secondary electrode ply 220.

The term "opposite surface" relates to the interfaces to the at least one primary electrode ply 210 and the at least one secondary electrode ply 220.

In an example, the insulating material comprises the glass fibers as mentioned afore.

In an example, the heat conducting structure is deposited on at least one separator ply such that it points away from the core material of the at least one separator ply, i.e. the separator membrane formed by the at least one separator ply.

In an example, a heat conducting structure layer is formed on the surface of the at least one separator ply that either faces the at least one primary electrode ply 210 or the at least one secondary electrode ply 220.

In an example of Fig. 3, the insulating material of the at least one separator ply comprises glass fibers.

In an example, the heat conducting structure is bound to the glass fibers.

In an example, the heat conducting structure is deposited on the glass fibers such that it points away from the core material of the at least one separator ply, i.e. the separator membrane formed by the at least one separator ply.

In an example, the insulating material is made of glass.

In an example, the insulating material is electrically insulating.

In an example, the insulating material is thermally insulating.

In an example, the insulating material is both electrically and thermally insulating.

As an effect, heat is removed from the separator ply, where there is a high rate of charge carriers passing and colliding with the separator ply.

Fig. 4 shows an example of an aircraft 300. The aircraft 300 comprises an airframe 310 comprised of building components 320, at least one load 330 and the battery system 330 of one of the previous examples. The battery system 330 and the at least one load 330 are supported by the airframe 300. The battery system 330 is connected to supply the load with energy. The battery system 330 transfers loads between the building components 320 of the airframe 300.

The term "building components" relates to frames, stringers, struts, wing box elements, components of the fuselage.

In an example, the battery system 330 becomes a building component of the aircraft 300.

In an example, the battery system 330 becomes a primary building component of the aircraft 300 subject to aerodynamic loads and main structural loads of the airframe.

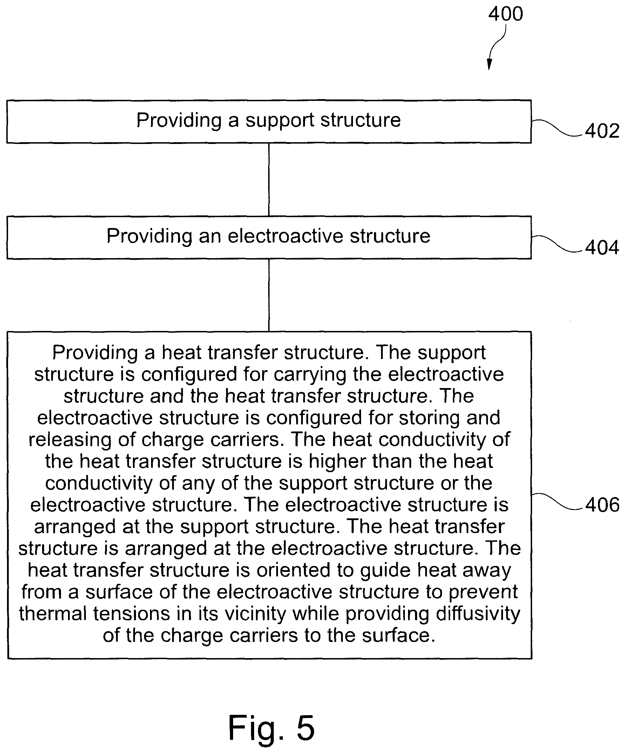

Fig. 5 shows basic steps of an example of a method 400 for making an electrode device. The method 400 comprises the following steps:
- In a first step 402 a support structure is provided.
- In a second step 404 an electroactive structure is provided.
- In a third step 406 a heat transfer structure is provided. The support structure is configured for carrying the electroactive structure and the heat transfer structure. The electroactive structure is configured for storing and releasing of charge carriers. The heat conductivity of the heat transfer structure is higher than the heat conductivity of any of the support structure or the electroactive structure. The electroactive structure is arranged at the support structure. The heat transfer structure is arranged at the electroactive structure. The heat transfer structure is oriented to guide heat away from a surface of the electroactive structure to prevent thermal tensions in its vicinity while providing diffusivity of the charge carriers to the surface.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An electrode device (10), comprising:
- a support structure (12);
- an electroactive structure (14); and
- a heat transfer structure (16);
wherein the support structure is configured for carrying the electroactive structure and the heat transfer structure;
wherein the electroactive structure is configured for storing and releasing of charge carriers (18);
wherein the heat conductivity of the heat transfer structure is higher than the heat conductivity of any of the support structure or the electroactive structure;
wherein the electroactive structure is arranged at the support structure;
wherein the heat transfer structure is arranged at the electroactive structure; and
wherein the heat transfer structure is oriented to guide heat away from a surface (22) of the electroactive structure to prevent thermal tensions in its vicinity while providing diffusivity of the charge carriers to the surface.

2. Device according to claim 1, wherein the support structure is further configured for uptake and transfer of loads between building components that are electrically insulated from the electrode device.

3. Device according to claim 1 or 2, wherein the heat transfer structure comprises a vertical oriented structure (28) that forms vertically aligned channels (30) at the surface of the electroactive structure and is configured to provide heat irradiation and to alleviate channeling of the charge carriers in a vertical direction (31) of the surface.

4. Device according to claim 3, wherein the vertical oriented structure comprises at least one of the group comprising: VACNTs, SWCNTs, MWCNTs, Armchair-CNTs, Zig-Zag-CNTs, Chiral CNTs, carbon nanofibers, carbon nanoparticles, carbon quantum dots, graphene, carbon nanoribbons and carbon nanohorns.

5. Device according to one of the preceding claims, wherein the support structure comprises a fibrous material.

6. Device according to one of the preceding claims, wherein the heat transfer structure is concentrated at a first face area (32) of the surface of the electroactive structure configured for the highest rate of charge carrier diffusivity.

7. Device according to one of the preceding claims, wherein the heat transfer structure is further concentrated at a second face area (34) of the electroactive structure opposite the first face area to guide accumulated heat away from the first face area and serve as electrical contact of the electrode device.

8. Device according to one of the preceding claims, further comprising a matrix material (36) enclosing at least a part of the heat transfer structure with the electroactive structure and the support structure; and
wherein at least a part (38) of the microstructure of the matrix material is aligned at a vertical orientation of the heat transfer structure.

9. Electrode ply (100), comprising:
a first electrode device (110) and at least a second electrode device (120) according to one of the preceding claims;
wherein the first and the at least second electrode device intersect a common plane (130); and
wherein an electroactive material of the first and the at least second electrode device is configured as cathode active material or anode material or separator material.

10. Battery system (200), comprising:
- at least one primary electrode ply (210) according to claim 9, wherein the electroactive structure is configured as a cathode active structure;
- at least one secondary electrode ply (220) according to claim 9, wherein the electroactive structure is configured as an anode active structure;
- at least one separator ply (230), comprising separator material comprising insulating material and an electrolyte;
wherein the at least one separator ply is stacked between the at least one primary electrode ply and the at least one secondary electrode ply; and
wherein the at least one separator ply is configured to electrically insulate the at least one primary electrode ply and the at least one secondary electrode ply while providing diffusion of charge carriers between the at least one primary electrode ply and the at least one secondary electrode ply.

11. Battery system according to claim 10, wherein the heat conducting structure is concentrated at at least one (240) of opposite faces of the at least one primary electrode ply and/or the at least one secondary electrode ply, that points towards or points away from the corresponding at least one primary electrode ply or at least one secondary electrode ply.

12. Battery system according to claim 10 or 11, wherein the heat conducting structure is concentrated on at least one (250) of opposite surfaces of the at least one separator ply that points towards the at least one primary electrode ply or the at least one secondary electrode ply.

13. Battery system according to claim 10, 11 or 12, wherein the insulating material of the at least one separator ply comprises glass fibers.

14. Aircraft (300), comprising;
- an airframe (310) comprised of building components (320);
- at least one load (330);
- the battery system (330) according to one of claims 10 to 13,
wherein the battery system and the at least one load are supported by the airframe;
wherein the battery system is connected to supply the load with energy; and
wherein the battery system transfers loads between the building components of the airframe.

15. A method (400) for making an electrode device, comprising the following steps:
- Providing (402) a support structure;
- Providing (404) an electroactive structure; and
- Providing (406) a heat transfer structure, wherein the support structure is configured for carrying the electroactive structure and the heat transfer structure, wherein the electroactive structure is configured for storing and releasing of charge carriers, wherein the heat conductivity of the heat transfer structure is higher than the heat conductivity of any of the support structure or the electroactive structure, wherein the electroactive structure is arranged at the support structure, wherein the heat transfer structure is arranged at the electroactive structure and wherein the heat transfer structure is oriented to guide heat away from a surface of the electroactive structure to prevent thermal tensions in its vicinity while providing diffusivity of the charge carriers to the surface.
